# EUROPEAN PATENT SPECIFICATION

(11) **EP 2 918 929 B1**
(45) Date of publication and mention of the grant of the patent: **05.08.2020**
(21) Application number: 13836819.6
(22) Date of filing: 27.08.2013
(51) Int. Cl.: F24F 1/0011, F24F 11/79, F24F 11/77

(54) **AIR-CONDITIONING INDOOR UNIT**
INNENRAUMEINHEIT EINER KLIMAANLAGE
UNITÉ INTÉRIEURE DE CLIMATISATION

(30) Priority: 13.09.2012 JP 2012201378
(43) Date of publication of application: 16.09.2015
(73) Proprietor: Daikin Industries, Ltd., Osaka-shi, Osaka 530-8323 (JP)
(72) Inventor: MORI, Takashige, Osaka-shi, Osaka 530-8323 (JP); MATSUBARA, Atsushi, Osaka-shi, Osaka 530-8323 (JP); FUJIOKA, Yuuki, Osaka-shi, Osaka 530-8323 (JP); NAKATA, Takahiro, Osaka-shi, Osaka 530-8323 (JP)
(74) Representative: Hoffmann Eitle
(86) International application number: PCT/JP2013/072859
(87) International publication number: WO 2014/042002

(56) References cited:
- EP-A2- 2 463 595
- CN-A- 1 133 962
- JP-A- H0 894 157
- JP-A- H09 318 144
- JP-A- 2001 124 391
- JP-A- 2012 037 235

## Description

### TECHNICAL FIELD

The present invention relates to an air conditioning indoor unit.

### BACKGROUND ART

Conventionally, there has been an air conditioning indoor unit that can form a circulating air flow in which outlet air circulates throughout an entire room. For example, the air conditioner indoor unit disclosed in JP-A No. 2009-58220 is a wall-mounted indoor unit installed on a wall surface of a room and blows out outlet air toward the ceiling to thereby form a circulating air flow in which the outlet air circulates in the room in the order of the ceiling surface, the wall surface opposing the indoor unit, and the floor surface. In CN 1 133 962 A there is disclosed an air conditioning indoor unit comprising the features defined in the preamble of claim 1.

### SUMMARY OF THE INVENTION

### <Technical Problem>

However, even if, like in the air conditioner indoor unit disclosed in JP-A No. 2009-58220, the outlet air is blown out toward the ceiling, in a case where the air volume of the outlet air is small, sometimes the outlet air does not reach the corners of the room and a circulating air flow cannot be formed.

Therefore, it is an object of the present invention to provide an air conditioning indoor unit that can reduce the concern that a circulating air flow will not be formed.

### <Solution to Problem>

An air conditioning indoor unit pertaining to a first aspect of the present invention is is defined in claim 1.

In the air conditioning indoor unit pertaining to the first aspect of the present invention, when the air direction switches from the second air direction to the first air direction, the air volume value is determined so as to exclude the predetermined small-air-volume-range. For this reason, in a case where a circulating air flow in which the outlet air circulates throughout the entire room is formed as a result of the air volume being adjusted to an air volume greater than an air volume belonging to the predetermined small-air-volume-range when the air direction is the first air direction, the lowest air volume necessary in order to form a circulating air flow becomes ensured even when the air direction switches from the second air direction to the first air direction. As a result, the concern that the air volume for forming a circulating air flow will be insufficient can be reduced.

Because of this, the concern that a circulating air flow will not be formed can be reduced.

An air conditioning indoor unit pertaining to a second aspect of the present invention is the air conditioning indoor unit of the first aspect, additionally comprising the features of claim 2. For this reason, even in a case where the air volume control unit has received the automatic air volume setting instruction from the user, the air volume value is determined from within the predetermined air volume value range when the air direction is the first air direction, and thus the concern that a circulating air flow will not be formed can be reduced.

An air conditioning indoor unit pertaining to a third aspect of the present invention is the air conditioning indoor unit of the first aspect or the second aspect, additionally comprising the features of claim 3. For this reason, in a case where the air volume control unit has received the predetermined air volume setting instruction from the user, the air volume can be adjusted to an air volume conforming to the air volume desired by the user even when forming a circulating air flow.

An air conditioning indoor unit pertaining to a fourth aspect of the present invention is the air conditioning indoor unit pertaining to the third aspect, additionally comprising the features of claim 4. For this reason, it can be ensured that the air volume does not become an air volume larger than the air volume desired by the user despite the fact that the air volume based on the predetermined air volume setting instruction is an air volume greater than an air volume belonging to the predetermined small-air-volume-range.

An air conditioning indoor unit pertaining to a fifth aspect of the present invention is the air conditioning indoor unit of any of the first aspect to the fourth aspect, additionally comprising the features of claim 5. In this air conditioning indoor unit, a circulating air flow can be formed using the first flap and the second flap.

### <Advantageous Effects of Invention>

In the air conditioning indoor unit pertaining to the first aspect of the present invention, the concern that a circulating air flow will not be formed can be reduced.

In the air conditioning indoor unit pertaining to the second aspect of the present invention, the concern that a circulating air flow will not be formed can be reduced even in a case where the automatic air volume setting instruction has been received from the user.

In the air conditioning indoor unit pertaining to the third aspect of the present invention, in a case where the predetermined air volume setting instruction has been received from the user, the air volume can be adjusted to an air volume conforming to the air volume desired by the user even when forming a circulating air flow.

In the air conditioning indoor unit pertaining to the fourth aspect of the present invention, it can be ensured that the air volume does not become an air volume larger than the air volume desired by the user despite the fact that the air volume based on the predetermined air volume setting instruction is an air volume greater than an air volume belonging to the predetermined small-air-volume-range.

In the air conditioning indoor unit pertaining to the fifth aspect of the present invention, a circulating air flow can be formed using the first flap and the second flap.

### BRIEF DESCRIPTION OF THE DRAWINGS

FIG. 1 is a cross-sectional view of an air conditioning indoor unit pertaining to an embodiment of the present invention;
FIG 2 is a cross-sectional view of the air conditioning indoor unit pertaining to the embodiment of the present invention;
FIG. 3A is a drawing showing the posture of a horizontal flap and the posture of a Coanda flap during execution of a horizontal blowing mode;
FIG 3B is a drawing showing the posture of the horizontal flap and the posture of the Coanda flap during execution of a frontward and downward blowing mode;
FIG. 3C is a drawing showing the posture of the horizontal flap and the posture of the Coanda flap during execution of an upward blowing mode;
FIG. 3D is a drawing showing the posture of the horizontal flap and the posture of the Coanda flap during execution of a downward blowing mode; and
FIG. 4 is a control block diagram of a control device with which the air conditioning indoor unit is equipped.

### DESCRIPTION OF EMBODIMENT

An embodiment of the present invention will be described below with reference to the drawings. It will be noted that the following embodiment is a specific example of the present invention and is not intended to limit the technical scope of the present invention.

### (1) Overall Configuration of Air Conditioning Indoor Unit

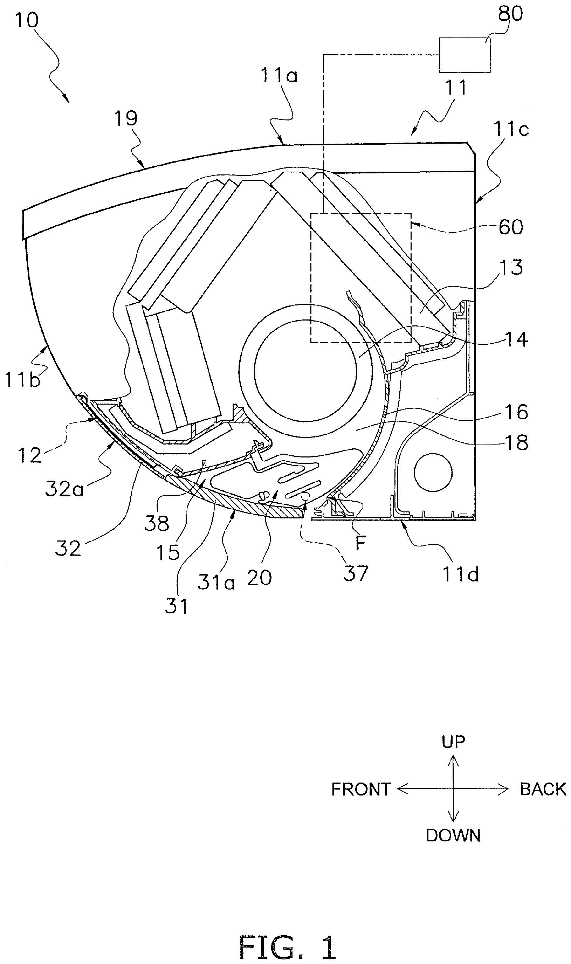

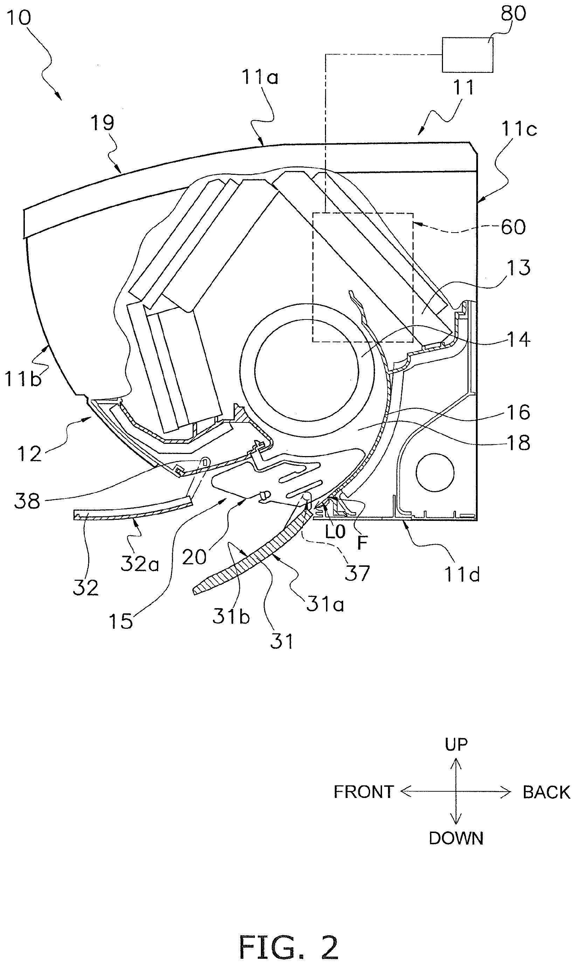

FIG. 1 is a cross-sectional view of an air conditioning indoor unit 10 when operation is stopped. FIG. 2 is a cross-sectional view of the air conditioning indoor unit 10 during operation.

The air conditioning indoor unit 10 is a wall-mounted air conditioning indoor unit attached to a wall surface of a room and is equipped with a main body casing 11, an indoor heat exchanger 13, an indoor fan 14, and a control device 60.

The main body casing 11 stores in its interior the indoor heat exchanger 13, the indoor fan 14, and the control device 60. Furthermore, an air inlet 19 for sucking room air into the main body casing 11 is disposed in the main body casing 11. Moreover, an air outlet 15 is disposed in the lower portion of the main body casing 11.

The indoor heat exchanger 13 and the indoor fan 14 are attached to a bottom frame 16. The indoor heat exchanger 13 performs heat exchange with air passing through it. Furthermore, the indoor heat exchanger 13 has an inverted V-shape bent such that both ends point downward as seen in a side view, and the indoor fan 14 is positioned below the indoor heat exchanger 13.

The indoor fan 14 is a cross-flow fan, applies the air taken in from the room via the air inlet 19 to the indoor heat exchanger 13, causes the air to pass through the indoor heat exchanger 13, and blows out the air into the room from the air outlet 15. It will be noted that the indoor fan 14 can, in accordance with its rotational speed, change the air volume of the outlet air blown out from the air outlet 15.

Furthermore, a horizontal flap 31 that can change the air direction, in the up and down direction, of the outlet air blown out from the air outlet 15 is attached, in such a way that it may freely rotate, in the air outlet 15. The horizontal flap 31 is driven by a motor (not shown in the drawings) and not only changes the flow, in the up and down direction, of the outlet air by assuming plural postures having different angles of inclination but can also open and close the air outlet 15. Furthermore, a Coanda flap 32 that can change the air direction, in the up and down direction, of the outlet air in cooperation with the horizontal flap 31 is disposed in the neighborhood of the air outlet 15 and above the horizontal flap 31. The Coanda flap 32 is driven by a motor (not shown in the drawings) and can assume plural postures having different angles of inclination.

It will be noted that the air outlet 15 is made continuous with the interior of the main body casing 11 by an outlet air passage 18. The outlet air passage 18 is formed along a scroll surface of the bottom frame 16 from the air outlet 15. Additionally, a vertical flap 20 that can change the air direction, in the right and left direction, of the outlet air blown out from the air outlet 15 is disposed in the outlet air passage 18. The vertical flap 20 has a configuration wherein plural blade pieces are coupled to one another by a coupling rod, and when the coupling rod reciprocally moves in the horizontal direction along the lengthwise direction of the main body casing 11, the vertical flap 20 swings right and left about a vertical state with respect to that lengthwise direction. It will be noted that the coupling rod is reciprocally moved in the horizontal direction by a motor (not shown in the drawings).

The control device 60 controls the rotational speed of the indoor fan 14 and controls the angles of the horizontal flap 31 and the Coanda flap 32. Furthermore, the control device 60 can, by controlling the angles of the horizontal flap 31 and the Coanda flap 32 to thereby cause the horizontal flap 31 and the Coanda flap 32 to assume predetermined postures, adjust the air direction to an air direction that can form a circulating air flow in which the outlet air circulates throughout the entire room.

It will be noted that the specific configurations of the air conditioning indoor unit 10 are not limited to those described above and that the air conditioning indoor unit 10 may also have other device configurations provided that it is an air conditioning indoor unit in which the air direction of the outlet air is adjusted to an air direction that can form a circulating air flow.

### (2) Detailed Configurations

### (2-1) Casing

The main body casing 11 has a top surface portion 11a, a front surface panel 11b, a back surface plate 11c, and a lower portion horizontal plate 11d. The top surface portion 11a is positioned on the upper portion of the main body casing 11, and the air inlet 19 is disposed in the front portion of the top surface portion 11a.

The front surface panel 1 1b configures the front surface portion of the air conditioning indoor unit 10 and extends from the front of the upper portion of the main body casing 11 toward the front end portion of the lower portion horizontal plate 11d while describing a gentle, circular arcuate curved surface. It will be noted that the front surface panel 11b has a flat shape having no air inlet. Furthermore, in the lower portion of the front surface panel 11b, there is a region recessed inward of the main body casing 11. The recessed depth of this region is set in such a way as to match the thickness dimension of the Coanda flap 32, and the recessed region configures a housing portion 12 in which the Coanda flap 32 is housed. It will be noted that the surface of the housing portion 12 is also a gentle, circular arcuate curved surface.

Furthermore, the air outlet 15 formed in the lower portion of the main body casing 11 is a rectangular opening whose long sides lie along the lengthwise direction of the main body casing 11. It will be noted that the rear end portion of the air outlet 15 is contiguous to the front end portion of the lower portion horizontal plate 11d and that an imaginary plane joining the rear end portion of the air outlet 15 and the front end portion of the air outlet 15 to one another is inclined forward and upward.

### (2-2) Horizontal Flap

The horizontal flap 31 is a plate-like member that is long in the lengthwise direction of the air conditioning indoor unit 10, and the horizontal flap 31 has an area sufficient enough to be able to close off the air outlet 15. Furthermore, an outside surface 31a of the horizontal flap 31 is finished to a gentle, circular arcuate curved surface that is outwardly convex in such a way as to lie on an extension of the curved surface of the front surface panel 11b in a state in which the horizontal flap 31 is closing off the air outlet 15. Additionally, an inside surface 31b of the horizontal flap 31 is a circular arcuate curved surface substantially parallel to the outside surface 31a. It will be noted that, in the present embodiment, although the inside surface 31b of the horizontal flap 31 is a circular arcuate curved surface, the inside surface of the horizontal flap 31 may also be a flat surface.

The horizontal flap 31 has a rotating shaft 37 on its rear end portion. The rotating shaft 37 is coupled to a rotating shaft of a motor (not shown in the drawings) fixed to the main body casing 11 in the neighborhood of the rear end portion of the air outlet 15.

Furthermore, in a state in which the horizontal flap 31 is opening the air outlet 15, the outlet air blown out from the air outlet 15 flows generally along the inside surface 31b of the horizontal flap 31. In particular, in a case where the inside surface 31b of the horizontal flap 31 is on the upper side of a tangent L0 to a terminal end F of the scroll surface, the outlet air blown out generally along the direction of the tangent L0 to the terminal end F of the scroll surface has its air direction changed upward by the horizontal flap 31.

### (2-3) Coanda Flap

The Coanda flap 32 is a plate-like member that is long in the lengthwise direction of the air conditioning indoor unit 10. Furthermore, an outside surface 32a of the Coanda flap 32 is finished to a gentle, circular arcuate curved surface that is outwardly convex in such a way as to lie on an extension of the gentle, circular arcuate curved surface of the front surface panel 11b in a state in which the Coanda flap 32 is housed in the housing portion 12. It will be noted that the Coanda flap 32 is stored in the housing portion 12 in a case where the operation of the air conditioning indoor unit 10 is stopped.

Furthermore, the Coanda flap 32 moves away from the housing portion 12 by rotating and assumes postures in which it is inclined in the front and rear direction. A rotating shaft 38 of the Coanda flap 32 is disposed in the neighborhood of the lower end of the housing portion 12 and in a position inside the main body casing 11 (a position above an upper wall of the outlet air passage 18), and the lower end portion of the Coanda flap 32 and the rotating shaft 38 are coupled to one another with a predetermined distance being maintained between them. Additionally, as the rotating shaft 38 rotates so that the upper end portion of the Coanda flap 32 moves away from the housing portion 12 of the front surface panel 11b, the height position of the lower end portion of the Coanda flap 32 becomes lower. Furthermore, the inclination of the Coanda flap 32 when it has rotated open is gentler than the inclination of the front surface panel 11b.

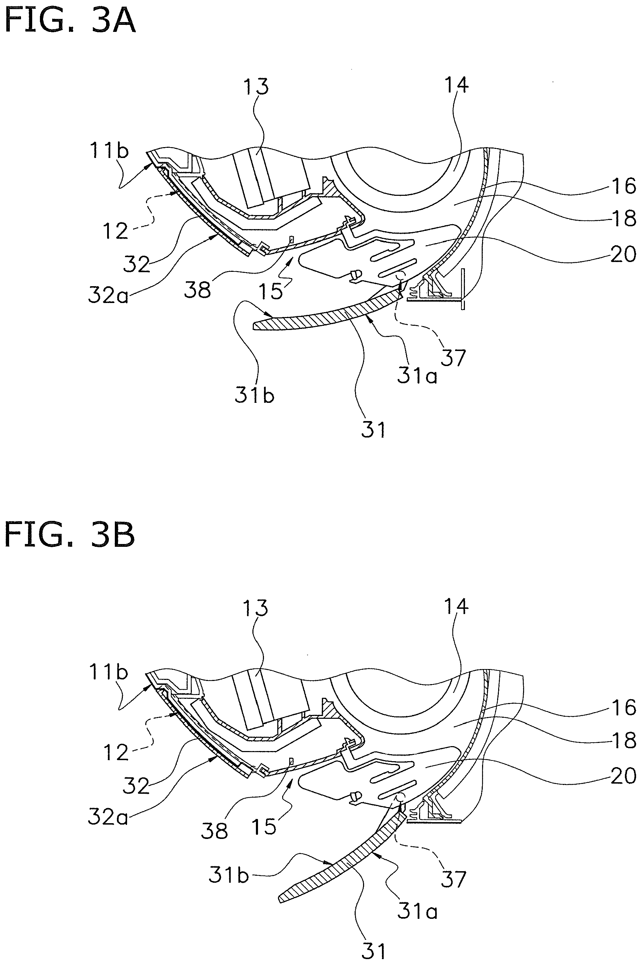

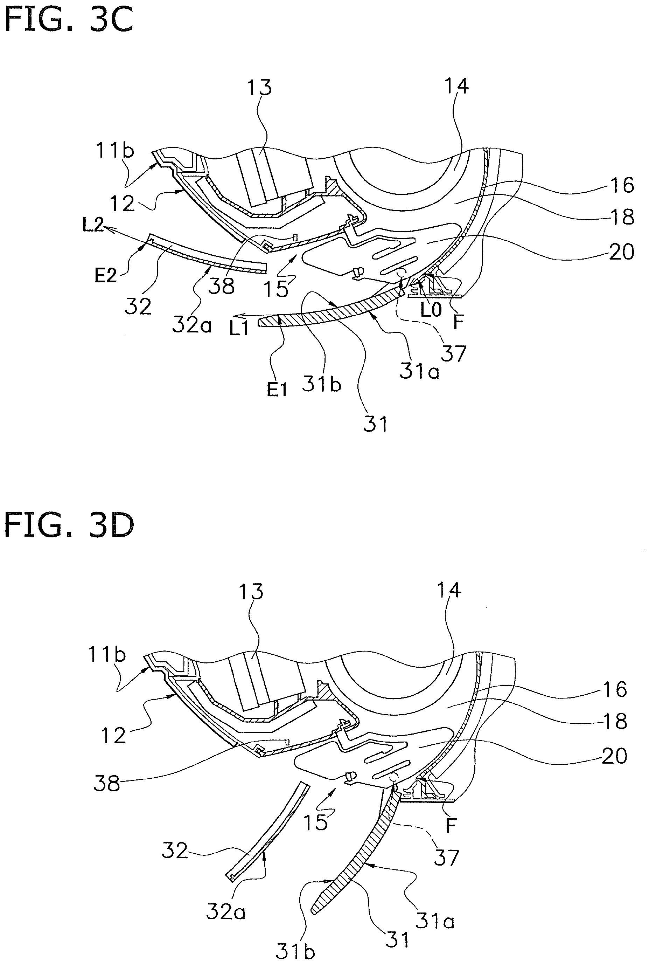

It will be noted that, in addition to the posture in which the Coanda flap 32 is stored in the housing portion 12 as shown in FIG. 3A and FIG. 3B, the Coanda flap 32 can also assume a posture in which it rotates to become inclined forward and upward as shown in FIG. 3C and a posture in which it further rotates to become inclined forward and downward as shown in FIG. 3D.

### (2-4) Control Device

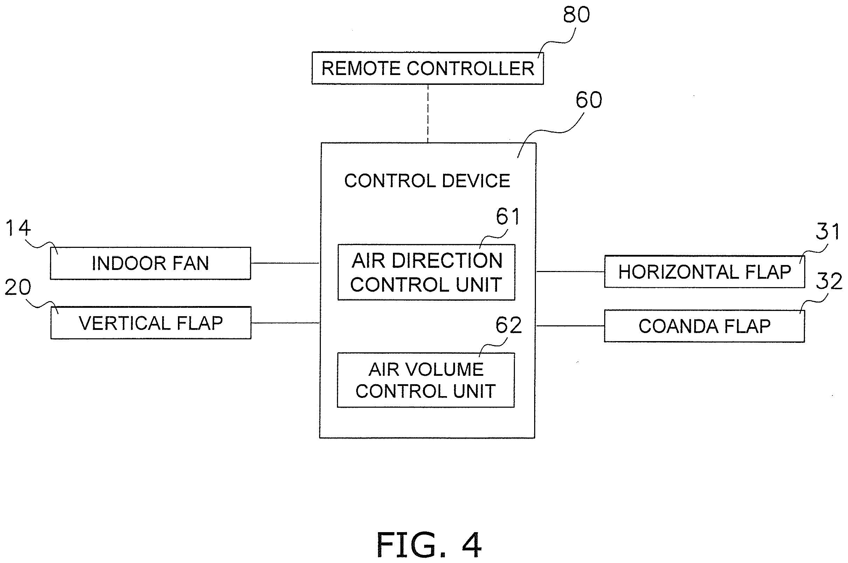

The control device 60 is, as shown in FIG. 4, connected to various members with which the air conditioning indoor unit 10 is equipped. Furthermore, the control device 60 can receive various setting instructions from a user via a remote controller 80 and controls the actions of the various members on the basis of the setting instructions it has received from the user. It will be noted that the control device 60 of the present embodiment is positioned on the right side of the indoor heat exchanger 13 and the indoor fan 14 in a case where the main body casing 11 is seen from the front surface panel 11b side.

Furthermore, the user can use the remote controller 80 to start and stop operations, set a set temperature that becomes a target temperature, and also set "operating mode", set "up and down air direction", set "air volume", and the like. It will be noted that setting the "operating mode" means setting the content of the operation performed by the air conditioning indoor unit 10; in the present embodiment, the user can set, as the "operating mode", various operating modes such as cooling, dehumidification, heating, humidification, fan, and automatic. Additionally, the control device 60 executes the various operating modes in accordance with the "operating mode" that has been set by the user.

Moreover, the control device 60 is equipped with an air direction control unit 61, which adjusts the air direction of the outlet air by controlling the angles of the horizontal flap 31 and the Coanda flap 32, and an air volume control unit 62, which adjusts the air volume of the outlet air by controlling the rotational speed of the indoor fan 14.

### (2-4-1) Air Direction Control Unit

The air direction control unit 61 controls the actions of the horizontal flap 31 and the Coanda flap 32 in such a way that the air direction becomes an air direction according to the setting of the "up and down air direction" made by the user via the remote controller 80. It will be noted that setting the "up and down air direction" means setting the up and down air direction of the outlet air; in the present embodiment, the user can select and set, as the "up and down air direction", an up and down air direction mode of any of a normal blowing mode, an upward blowing mode, a downward blowing mode, a natural air direction mode, and an automatic air direction mode.

When the "up and down air direction" is set to the normal blowing mode, the air direction control unit 61 executes the normal blowing mode by rotating only the horizontal flap 31 to adjust the air direction of the outlet air. It will be noted that, in the normal blowing mode, the user can furthermore select a horizontal blowing mode and a forward and downward blowing mode; when the "up and down air direction" is set to the horizontal blowing mode, as shown in FIG. 3A, the air direction control unit 61 rotates the horizontal flap 31 to a position in which the inside surface 31b of the horizontal flap 31 becomes substantially horizontal so that the outlet air is blown out in a forward direction along the inside surface 31b of the horizontal flap 31. Furthermore, when the "up and down air direction" is set to the forward and downward blowing mode, as shown in FIG. 3B, the air direction control unit 61 rotates the horizontal flap 31 until the inside surface 31b of the horizontal flap 31 becomes lower in front than it is when horizontal so that the outlet air is blown out forward and downward along the inside surface 31b of the horizontal flap 31. In this way, when the normal blowing mode is executed, the outlet air is blown out forward or forward and downward.

When the "up and down air direction" is set to the upward blowing mode, the air direction control unit 61 executes the upward blowing mode by rotating the horizontal flap 31 and the Coanda flap 32 to adjust the air direction of the outlet air. It will be noted that, in the present embodiment, the user can set the "up and down air direction" to the upward blowing mode only when the "operating mode" is set to cooling, dehumidification, or fan.

Here, Coanda (effect) is a phenomenon where, if there is a wall near a flow of gas or liquid, the gas or liquid tends to flow in a direction along the wall surface even if the direction of the flow and the direction of the wall are different (*Ho̅soku no jiten,* Asakura Publishing Co., Ltd.). Additionally, in the upward blowing mode, this Coanda effect is utilized to change the outlet air to a Coanda air flow along the outside surface 32a of the Coanda flap 32.

In this connection, in order to produce the Coanda effect on the outside surface 32a side of the Coanda flap 32, the air direction of the outlet air changed by the horizontal flap 31 needs to head toward the Coanda flap 32. Additionally, if the horizontal flap 31 and the Coanda flap 32 are too far away from one another, the Coanda effect cannot be produced on the outside surface 32a side of the Coanda flap 32. For this reason, in order to produce the Coanda effect on the outside surface 32a side of the Coanda flap 32, the angle formed by the horizontal flap 31 and the Coanda flap 32 needs to be equal to or less than a predetermined open angle. Consequently, in the upward blowing mode, the air direction control unit 61 ensures that the above-described relationship is satisfied by setting the angles (postures) of the horizontal flap 31 and the Coanda flap 32 in such a way that the angle formed by the horizontal flap 31 and the Coanda flap 32 is in a range equal to or less than the predetermined open angle.

Additionally, in the upward blowing mode of the present embodiment, the air direction control unit 61 first rotates the horizontal flap 31 until the inside surface 31b of the horizontal flap 31 becomes substantially horizontal. Next, the air direction control unit 61 rotates the Coanda flap 32 until the outside surface 32a of the Coanda flap 32 points forward and upward (see FIG. 3C). Because of this, the outlet air adjusted to an air direction in a substantially horizontal direction by the horizontal flap 31 becomes a flow attached to the outside surface 32a of the Coanda flap 32 because of the Coanda effect and changes to a Coanda air flow along the outside surface 32a. Consequently, even when the direction of a tangent L1 to a front end E1 of the horizontal flap 31 is the horizontal direction, the direction of a tangent L2 to a front end E2 of the Coanda flap 32 is an obliquely upward direction, so the outlet air is blown out in the direction of the tangent L2 to the front end E2 of the outside surface 32a of the Coanda flap 32-that is, in the direction of the ceiling-because of the Coanda effect.

When the "up and down air direction" is set to the downward blowing mode, the air direction control unit 61 executes the downward blowing mode by rotating the horizontal flap 31 and the Coanda flap 32 to adjust the air direction of the outlet air. It will be noted that the downward blowing mode is a mode executed in a case where the posture of the horizontal flap 31 points more downward than the tangent L0 to the terminal end F of the scroll. Specifically, in the downward blowing mode, the air direction control unit 61 first rotates the horizontal flap 31 until the inside surface 31b of the horizontal flap 31 points downward. Next, the air direction control unit 61 rotates the Coanda flap 32 until the outside surface 32a of the Coanda flap 32 points downward (see FIG. 3D). Because of this, the outlet air passes between the horizontal flap 31 and the Coanda flap 32, is blown out downward, which is to say toward the floor surface of the room, and heads toward the floor surface of the room.

The natural air direction mode is a mode in which the air direction is adjusted by a so-called auto louver function, and is utilized as means for alternating between an action that applies the outlet air to a person's body and an action that does not apply the outlet air to a person's body.

Additionally, when the "up and down air direction" is set to the natural air direction mode, the air direction control unit 61 executes the natural air direction mode by rotating the horizontal flap 31 and the Coanda flap 32 to adjust the air direction of the outlet air.

Furthermore, in the natural air direction mode of the present embodiment, the Coanda air flow is utilized in order to approximate the way wind is in the natural world, where wind suddenly strikes a person's body. More specifically, in the natural air direction mode, the horizontal flap 31 and/or the Coanda flap 32 swing in irregular cycles to generate the Coanda air flow and also produce an air flow along the inside surface 31b of the horizontal flap 31 without generating the Coanda air flow. Because of this, there is an irregular alternation between generation and extinguishment of the Coanda air flow, and thus a wind that suddenly strikes a person's body is created. It will be noted that, in the present embodiment, the user can set the "up and down air direction" to the natural air direction mode only when the "operating mode" is set to cooling.

The automatic air direction mode is a mode that automatically adjusts the air direction of the outlet air, and the air direction is automatically switched in accordance with the "operating mode" that is set.

When the "up and down air direction" is set to the automatic air direction mode, the air direction control unit 61 selects, in accordance with the "operating mode" that is set, a predetermined up and down air direction mode from the upward blowing mode, the downward blowing mode, and the natural air direction mode and executes the up and down air direction mode it has selected.

It will be noted that, in the present embodiment, the user can set the "up and down air direction" to the automatic air direction mode provided that it is other than when the "operating mode" is set to fan. Furthermore, in the present embodiment, in a case where the "operating mode" is set to humidification, only the upward blowing mode is executed even if the "up and down air direction" is set to the automatic air direction mode.

For example, in a case where the "operating mode" is set to cooling or dehumidification, the air direction control unit 61 selects the upward blowing mode and the natural air direction mode. Additionally, in a case where a predetermined condition has been met, the air direction control unit 61 switches between the upward blowing mode and the natural air direction mode. Consequently, in a case where the "operating mode" is set to cooling or dehumidification and the "up and down air direction" is set to the automatic air direction mode, the upward blowing mode and the natural air direction mode become alternately executed. Furthermore, for example, in a case where the "operating mode" is set to heating, the air direction control unit 61 selects the upward blowing mode and the downward blowing mode. Additionally, in a case where a predetermined condition has been met, the air direction control unit 61 switches between the upward blowing mode and the downward blowing mode. Consequently, in a case where the "operating mode" is set to heating and the "up and down air direction" is set to the automatic air direction mode, the upward blowing mode and the downward blowing mode become alternately executed.

It will be noted that examples of the predetermined condition whereby the downward blowing mode or the natural air direction mode and the upward blowing mode are switched between include a condition relating to the environment of the room (e.g., whether or not the difference between the room temperature and the set temperature is within a predetermined range) and a condition relating to the operating circumstances of the air conditioner (e.g., whether or not the operating frequency of the compressor is equal to or less than a predetermined frequency, or whether or not the thermostat has switched from on to off).

### (2-4-2) Air Volume Control Unit

The air volume control unit 62 controls the actions of the indoor fan 14 in accordance with an air volume value it has determined, in such a way that the air volume becomes an air volume according to the setting of the "air volume" made by the user via the remote controller 80. It will be noted that setting the "air volume" means setting the air volume of the outlet air; in the present embodiment, the user can select and set, as the "air volume", either of a fixed air volume and an automatic air volume.

When the "air volume" is set to the fixed air volume, the air volume control unit 62 determines the air volume value to be a set value corresponding to a predetermined air volume that has been set and controls the indoor fan 14 in such a way that the rotational speed becomes a rotational speed corresponding to the air volume value it has determined. Furthermore, in the fixed air volume, an air volume H, an air volume M, and an air volume L can be selected in order of descending air volumes as the predetermined air volume, and the air volume control unit 62 determines the air volume value to be a set value corresponding to the predetermined air volume that has been selected and set. It will be noted that, in the present embodiment, although the predetermined air volume in the fixed air volume is divided into three stages consisting of the air volume H, the air volume M, and the air volume L, it may also be divided into an even greater number of stages.

Furthermore, when the "air volume" is set to the automatic air volume, the air volume control unit 62 determines the air volume value from within a predetermined air volume value range in accordance with the environment of the room and controls the indoor fan 14 in such a way that the rotational speed becomes a rotational speed corresponding to the air volume value it has determined. It will be noted that, in the present embodiment, the predetermined air volume value range includes set values corresponding to the air volume H, the air volume M, or the air volume L, and in a case where the "air volume" is set to the automatic air volume, the air volume control unit 62 selects any of the set values corresponding to the air volume H, the air volume M, or the air volume L in accordance with the environment of the room and determines, as the air volume value, the set value it has selected. For example, in a case where the difference between the room temperature and the set temperature is large, the air volume control unit 62 selects the set value corresponding to the air volume H and then selects the set values corresponding to the air volume M and the air volume L as the difference between the room temperature and the set temperature becomes smaller.

It will be noted that, in the present embodiment, when the "air volume" is set to the automatic air volume, the set value corresponding to the predetermined air volume (the air volume H, the air volume M, or the air volume L) is selected in accordance with the room temperature and the set temperature, but the set value corresponding to the predetermined air volume (the air volume H, the air volume M, or the air volume L) may also be selected in accordance with other additional requirements (e.g., room humidity and set humidity, weather, season, etc.). Furthermore, in the present embodiment, when the "air volume" is set to the automatic air volume, the air volume control unit 62 selects the set value corresponding to the predetermined air volume of any of the air volume H, the air volume M, and the air volume L, but the set value that can be selected is not limited to this provided that it is a set value in the predetermined air volume value range.

Furthermore, when the up and down air direction mode is switched to the upward blowing mode by the air direction control unit 61, the air volume control unit 62 determines the air volume value so as to exclude a predetermined small-air-volume-range. It will be noted that, in the present embodiment, in a case where the user has set the "up and down air direction" to the upward blowing mode or the automatic air direction mode, the up and down air direction mode is switched to the upward blowing mode by the air direction control unit 61.

The predetermined small-air-volume-range is an air volume range corresponding to set values less than a predetermined set value (hereinafter called a necessary set value), and when the air volume value is determined to be a set value equal to or greater than the necessary set value and the indoor fan 14 is rotated in accordance with that air volume value that has been determined, provided that the upward blowing mode is being executed, a circulating air flow can be formed in which the outlet air blown out from the air outlet 15 toward the ceiling flows along the ceiling surface of the room because of the Coanda effect and thereafter circulates throughout the entire room in the order of the wall surface opposing the wall surface on which the air conditioning indoor unit 10 is installed and the floor surface. That is, the air volume corresponding to the necessary set value is the lowest air volume necessary in order to form a circulating air flow. Additionally, a circulating air flow can be formed as a result of the air volume being adjusted to an air volume greater than an air volume belonging to the predetermined small-air-volume-range. It will be noted that the necessary set value in the present embodiment is equal to the set value corresponding to the air volume M.

When, in a case where the "air volume" is set to the fixed air volume, the up and down air direction mode switches to the upward blowing mode, the air volume control unit 62 adds a correction value to the set value corresponding to the predetermined air volume according to the "air volume" that has been set by the user and determines the air volume value. On the other hand, when, in a case where the "air volume" is set to the fixed air volume, the up and down air direction mode switches to an up and down air direction mode other than the upward blowing mode, the air volume control unit 62 determines the air volume value to be the set value corresponding to the predetermined air volume according to the "air volume" that has been set by the user. Consequently, in a case where the "air volume" is set to the fixed air volume, if the up and down air direction mode is the upward blowing mode, the air volume control unit 62 adds the correction value to the set value corresponding to the predetermined air volume when the up and down air direction mode is an up and down air direction mode other than the upward blowing mode and determines the air volume value.

Here, because the necessary set value in the present embodiment is equal to the set value corresponding to the air volume M, the air volume enters the predetermined small-air-volume-range if the "air volume" is set to the air volume L. For this reason, when, in a case where the "air volume" is set to the air volume L, the up and down air direction mode switches to the upward blowing mode, the air volume control unit 62 adds the correction value to the set value corresponding to the air volume L and determines the air volume value. It will be noted that, in the present embodiment, the air volume value becomes a value equal to or greater than the set value corresponding to the air volume M as a result of the correction value being added to the set value corresponding to the air volume L.

Furthermore, the predetermined air volume value range when the "air volume" is the automatic air volume is different between a case where the up and down air direction mode is the upward blowing mode and a case where the up and down air direction mode is a mode other than the upward blowing mode. Here, assuming that the predetermined air volume value range when the up and down air direction mode is the upward blowing mode is a first air volume value range and that the predetermined air volume value range when the up and down air direction mode is a mode other than the upward blowing mode is a second air volume value range, the lower limit value of the first air volume value range is greater than the lower limit value of the second air volume value range. It will be noted that the lower limit value of the first air volume value range in the present embodiment-that is, the smallest set value that the air volume control unit 62 can select in the first air volume value range-is the set value corresponding to the air volume M, and the lower limit value of the second air volume value range-that is, the smallest set value that the air volume control unit 62 can select in the second air volume value range-is the set value corresponding to the air volume L. Consequently, in the present embodiment, when, in a case where the "air volume" is set to the automatic air volume, the up and down air direction mode is switched to the upward blowing mode, the air volume control unit 62 selects the set value corresponding to the air volume of either the air volume H or the air volume M in accordance with the room temperature and the set temperature and determines the air volume value to be the set value it has selected.

### (3) Air Volume Control during Execution of Upward Blowing Mode

### (3-1) Air Volume Control When "Up and Down Air Direction" is set to Upward Blowing Mode

In a case where the user has set the "up and down air direction" to the upward blowing mode and has set the "air volume" to the air volume L, the air volume control unit 62 adds the correction value to the set value corresponding to the air volume L and determines the air volume value. In the present embodiment, the lowest air volume necessary in order to form a circulating air flow is equal to the air volume when the air volume value has been determined to be the set value corresponding to the air volume M, and when the correction value is added to the set value corresponding to the air volume L, the set value becomes a value equal to or greater than the set value corresponding to the air volume M. Consequently, even if the "air volume" is set to the air volume L, the air volume is adjusted to an air volume equal to or greater than the air volume M, so the air volume necessary in order to form a circulating air flow becomes ensured.

On the other hand, in a case where the user has set the "up and down air direction" to the upward blowing mode and has set the "air volume" to the air volume H or the air volume M, the air volume control unit 62 determines, as the air volume value, the set value corresponding to the predetermined air volume (the air volume H or the air volume M) set by the user and does not, like when the "air volume" is set to the air volume L, perform the control in which it adds the correction value to the set value corresponding to the predetermined air volume and determines the air volume value. This is because, since the lowest air volume necessary in order to form a circulating air flow is equal to the air volume when the air volume value has been determined to be the set value corresponding to the air volume M, the air volume necessary in order to form a circulating air flow is ensured if the "air volume" is set to the air volume H or the air volume M, and it is also to prevent a divergence from the "air volume" that has been set by the user.

Furthermore, in a case where the user has set the "up and down air direction" to the upward blowing mode and has set the "air volume" to the automatic air volume, the air volume control unit 62 selects the set value corresponding to the air volume of either the air volume H or the air volume M in accordance with the room temperature and the set temperature and determines the air volume value to be the set value it has selected. In the present embodiment, a circulating air flow can be formed as a result of the air volume being adjusted to an air volume equal to or greater than the air volume M, so when the air volume value is determined to be the set value corresponding to the air volume H or the air volume M, the air volume necessary in order to form a circulating air flow becomes ensured.

### (3-2) Air Volume Control When "Up and Down Air Direction" is set to Automatic Air Direction Mode

In a case where the "up and down air direction" is set to the automatic air direction mode, the air volume control unit 62 performs air volume control in such a way that the lowest air volume necessary in order to form a circulating air flow is ensured only while the up and down air direction mode is switched to the upward blowing mode by the air direction control unit 61.

More specifically, when, in a case where the user has set the "up and down air direction" to the automatic air direction mode and has set the "air volume" to the air volume L, the up and down air direction mode switches from the natural air direction mode or the downward blowing mode to the upward blowing mode, the air volume control unit 62 adds the correction value to the set value corresponding to the air volume L and determines the air volume value. When the air volume control unit 62 adds the correction value to the set value corresponding to the air volume L, the set value becomes a value equal to or greater than the set value corresponding to the air volume M, so the air volume is adjusted to an air volume corresponding to the set value to which the correction value has been added; thus, while the upward blowing mode is being executed, an air volume equal to or greater than the air volume M-that is, the air volume necessary in order to form a circulating air flow-becomes ensured. Additionally, when the up and down air direction mode switches from the upward blowing mode to the natural air direction mode or the downward blowing mode, the air volume control unit 62 determines the air volume value to be the set value corresponding to the air volume L. Because of this, while the natural air direction mode or the downward blowing mode is being executed, the air volume can be adjusted to the predetermined air volume (the air volume L) according to the setting made by the user.

On the other hand, in a case where the user has set the "up and down air direction" to the automatic air direction mode and has set the "air volume" to the air volume H or the air volume M, even if the up and down air direction mode switches from the natural air direction mode or the downward blowing mode to the upward blowing mode, the air volume control unit 62 does not, like when the air volume L is set as the "air volume", perform the control in which it adds the correction value to the set value corresponding to the predetermined air volume and determines the air volume value. For this reason, no matter which the up and down air direction mode of the natural air direction mode, the downward blowing mode, or the upward blowing mode is being executed, the air volume is adjusted to the predetermined air volume (the air volume H or the air volume M) that has been set. This is because, since the lowest air volume necessary in order to form a circulating air flow is equal to the air volume when the air volume value has been determined to be the set value corresponding to the air volume M, the air volume necessary in order to form a circulating air flow is ensured if the "air volume" is set to the air volume H or the air volume M, and it is also to prevent a divergence from the "air volume" that has been set by the user.

Furthermore, when, in a case where the user has set the "up and down air direction" to the automatic air direction mode and has set the "air volume" to the automatic air volume, the up and down air direction mode switches from the natural air direction mode or the downward blowing mode to the upward blowing mode, the air volume control unit 62 selects the set value corresponding to the air volume of either the air volume H or the air volume M in accordance with the room temperature and the set temperature and determines the air volume value to be the set value it has selected. It will be noted that, in the present embodiment, a circulating air flow can be formed as a result of the air volume being adjusted to an air volume equal to or greater than the air volume M, so when the air volume value is determined to be the set value corresponding to the air volume H or the air volume M, the air volume necessary in order to form a circulating air flow becomes ensured while the upward blowing mode is being executed. Additionally, when the up and down air direction mode switches from the upward blowing mode to the natural air direction mode or the downward blowing mode, the air volume control unit 62 selects the set value corresponding to the air volume H, the air volume M, or the air volume L in accordance with the room temperature and the set temperature and determines the air volume value to be the set value it has selected. Because of this, while the natural air direction mode or the downward blowing mode is being executed, the air volume can be adjusted to the predetermined air volume (the air volume H, the air volume M, or the air volume L) according to the room temperature and the set temperature.

Here, the timing when the air volume is adjusted in such a way that the lowest air volume for forming a circulating air flow is ensured (so as to exclude the predetermined small-air-volume-range) may be when the up and down air direction mode is switching from the natural air direction mode or the downward blowing mode to the upward blowing mode-that is, simultaneous with the rotation of the horizontal flap 31 and the Coanda flap 32-or may be after the up and down air direction mode has switched from the natural air direction mode or the downward blowing mode to the upward blowing mode-that is, after the rotation of the horizontal flap 31 and the Coanda flap 32 has been completed. It will be noted that, when the air volume is adjusted when the up and down air direction mode is switching from the natural air direction mode or the downward blowing mode to the upward blowing mode, there is the potential for the outlet air to be blown onto the user, so the timing when the air volume is adjusted is preferably after the up and down air direction mode has switched from the natural air direction mode or the downward blowing mode to the upward blowing mode.

Furthermore, in the present embodiment, when the up and down air direction mode switches to the upward blowing mode, the air volume is adjusted so as to exclude the predetermined small-air-volume-range regardless of whether the thermostat is on or off. Because of this, a circulating air flow can be formed even in a state in which the thermostat is off.

### (4) Characteristics

(4-1) In the present embodiment, the user can select and set, as the "up and down air direction", an up and down air direction mode of any of the normal blowing mode, the upward blowing mode, the downward blowing mode, the natural air direction mode, and the automatic air direction mode. Furthermore, the air direction control unit 61 adjusts the air direction, in the up and down direction, of the outlet air in accordance with the setting of the "up and down air direction" made by the user. Here, assuming that an air direction heading toward the ceiling of the room is a first air direction and that an air direction heading downward is a second air direction, in the present embodiment, the air direction of the outlet air when the upward blowing mode is executed by the air direction control unit 61 corresponds to the first air direction, and the air direction of the outlet air when an up and down air direction mode other than the upward blowing mode is executed corresponds to the second air direction. Additionally, depending on the up and down air direction mode that is executed, sometimes the air direction control unit 61 switches the air direction to the first air direction that is an air direction heading toward the ceiling.
   In this connection, even if the air direction of the outlet air is switched to the first air direction that is an air direction heading toward the ceiling, there is the problem that if the air volume of the outlet air is small, the outlet air will not reach the corners of the room and a circulating air flow that circulates throughout the entire room will not be able to be formed. For example, even if the outlet air is blown out toward the ceiling in order to form a circulating air flow, in a case where the air volume of the outlet air is small, there is the concern that a circulating air flow will not be able to be formed because the outlet air will not reach the ceiling surface or will not reach the corners of the room.
   Therefore, in the present embodiment, when the upward blowing mode is executed by the air direction control unit 61, that is, when the air direction switches from the second air direction to the first air direction, the air volume control unit 62 determines the air volume value so as to exclude the predetermined small-air-volume-range and controls the rotational speed of the indoor fan 14 in accordance with the air volume value it has determined. In the present embodiment, a circulating air flow can be formed as a result of the air volume being adjusted to an air volume greater than an air volume belonging to the predetermined small-air-volume-range, so even when the air direction of the outlet air is switched from the second air direction to the first air direction, the air volume necessary in order to form a circulating air flow becomes ensured. Consequently, in a case where the air direction of the outlet air is the first air direction, the concern that the air volume for forming a circulating air flow will be insufficient can be reduced.
   Because of this, the concern that a circulating air flow will not be formed can be reduced.
(4-2) In the present embodiment, a circulating air flow is formed as a result of the outlet air being blown out toward the ceiling of the room. For this reason, for example, even if the air volume when the circulating air flow is formed is larger than the setting of the "air volume" made by the user, the outlet air is blown out toward the ceiling and is not blown out toward the user, so it can be made difficult for the user to feel the noise produced by the rotation of the indoor fan 14.
   Furthermore, the air volume is adjusted after the up and down air direction mode has switched to the upward blowing mode, so it can be made even more difficult for the user to feel the noise produced by the rotation of the indoor fan 14.
(4-3) In the present embodiment, when, in a case where the "air volume" is set to the automatic air volume, the up and down air direction mode is switched to the upward blowing mode, the air volume control unit 62 selects the set value corresponding to the air volume H or the air volume M in accordance with the room temperature and the set temperature and determines the set value it has selected to be the air volume value. In the present embodiment, a circulating air flow can be formed as a result of the air volume being adjusted to an air volume equal to or greater than the air volume M, so even if the "air volume" is set to the automatic air volume, the concern that a circulating air flow will not be formed can be reduced.
(4-4) In the present embodiment, in a case where the "air volume" is set to the fixed air volume, the air volume control unit 62 adds the correction value to the set value corresponding to the predetermined air volume that has been set and determines the air volume value in such a way that the air volume value when the up and down air direction mode is the upward blowing mode becomes a set value equal to or greater than the necessary set value. For this reason, compared to a case where the air volume when the up and down air direction mode is the upward blowing mode is fixed at a constant air volume, the air volume can be adjusted to an air volume conforming to the air volume desired by the user.
(4-5) In the present embodiment, only in a case where the "air volume" is set to the air volume L, when the up and down air direction mode switches to the upward blowing mode, the air volume control unit 62 adds the correction value to the set value corresponding to the air volume L and determines the air volume value. That is, when the air volume according to the setting instruction relating to the "air volume" from the user will not enter the predetermined small-air-volume-range, the correction value is not added to the set value corresponding to that air volume and the air volume is not adjusted in such a way as to become larger. For this reason, it can be ensured that the air volume does not become an air volume larger than the set air volume desired by the user despite the fact that the air volume according to the setting made by the user is an air volume equal to or greater than the air volume necessary in order to form a circulating air flow.
(4-6) In the present embodiment, the horizontal flap 31 and the Coanda flap 32 cooperate with one another to change the outlet air to a Coanda air flow along the outside surface (undersurface) 32a of the Coanda flap 32 and guide the Coanda air flow to the ceiling surface of the room. In this air conditioning indoor unit 10, the horizontal flap 31 and the Coanda flap 32 can be utilized to blow out the outlet air toward the ceiling of the room and form a circulating air flow.
(4-7) In the present embodiment, when the upward blowing mode is executed during cooling, the outlet air can be made to travel along a ceiling surface having few obstacles because of the Coanda effect, so the outlet air can be delivered farther.

Furthermore, when the upward blowing mode is executed during heating, the outlet air can be sent toward the ceiling surface, so the warm air collecting in the neighborhood of the ceiling can be agitated so that unevenness in the temperature of the room can be mitigated. Moreover, in the present embodiment, air volume adjustment is performed during execution of the upward blowing mode, so the concern that a circulating air flow will not be able to be formed due to an insufficient air volume and that unevenness in the temperature of the room will be not improved can be reduced.

### (5) Example Modifications

### (5-1) Example Modification A

In the above-described embodiment, the horizontal flap 31 and the Coanda flap 32 are utilized in order to change the air direction of the outlet air to an air direction in which a circulating air flow is formed. However, the configuration of the air conditioning indoor unit is not limited to this provided that it can change the air direction of the outlet air to an air direction in which a circulating air flow is formed. For example, the air conditioning indoor unit 10 does not have to be equipped with the Coanda flap 32 if it can change, using just the horizontal flap 31, the air direction of the outlet air to an air direction in which a circulating air flow is formed.

Furthermore, in the above-described embodiment, the posture of the horizontal flap 31 and the posture of the Coanda flap 32 during execution of the upward blowing mode are set beforehand. Instead of this, the posture of the horizontal flap 31 and the posture of the Coanda flap 32 can be changed provided that the angle formed by the horizontal flap 31 and the Coanda flap 32 is in a range equal to or less than the predetermined open angle. Because of this, a circulating air flow according to the shape of the room in which the air conditioning indoor unit 10 is installed and obstacles on the ceiling can be formed.

Moreover, the posture of the horizontal flap 31 and the posture of the Coanda flap 32 during execution of the upward blowing mode may also be different in accordance with the operating mode, and may also, for example, be changeable by the remote controller 80.

### (5-2) Example Modification B

In the above-described embodiment, when, in a case where the "air volume" is set to the air volume L or to the automatic air volume, the up and down air direction mode switches to the upward blowing mode, the air volume is adjusted so as to exclude the predetermined small-air-volume-range. Furthermore, the lowest air volume necessary in order to form a circulating air flow is ensured as a result of the correction value being added to the set value corresponding to the air volume L and the air volume being adjusted to an air volume equal to or greater than the air volume M in a case where the "air volume" is set to the air volume L or as a result of the air volume being adjusted to the air volume of either the air volume H or the air volume M in a case where the "air volume" is set to the automatic air volume.

In this connection, the air volume that is adjusted in such a way that the lowest air volume for forming a circulating air flow is ensured does not have to be set beforehand; for example, the correction value and the lower limit value of the predetermined air volume value range may also be changeable in consideration of the installation conditions of the air conditioning indoor unit 10 and the like. However, there is the concern that, by raising the air volume, the noise produced by the rotation of the indoor fan 14 will increase and/or that dirtying of the ceiling against which the outlet air is blown will be promoted, so in consideration of these things it is preferred that the correction value and the lower limit value of the predetermined air volume value range be set.

### INDUSTRIAL APPLICABILITY

The present invention is an invention that can, by adjusting the air volume of outlet air, reduce the concern that a circulating air flow will not be formed, and the present invention is effectively applied to an air conditioning indoor unit.

### REFERENCE SIGNS LIST

- 10: Air Conditioning Indoor Unit
- 11: Main Body Casing (Casing)
- 14: Indoor Fan (Fan)
- 15: Air Outlet
- 31: Horizontal Flap (Flap/First Flap)
- 32: Coanda Flap (Flap/Second Flap)
- 32a: Outside Surface (Undersurface)
- 61: Air Direction Control Unit
- 62: Air Volume Control Unit

## Claims

1. An air conditioning indoor unit (10) comprising:
a casing (11) in which an air outlet (15) is formed;
a fan (14) that can change the air volume of outlet air blown out from the air outlet;
a flap (31, 32) that can change the air direction, in the up and down direction, of the outlet air;
an air volume control unit (62) that is configured to adjust the air volume by controlling the rotational speed of the fan in accordance with an air volume value it has determined; and
an air direction control unit (61) that is configured to adjust the air direction by controlling the angle of the flap and can switch between a first air direction in which the outlet air heads toward a ceiling and a second air direction in which the outlet air heads downward,
**characterized in that** when the air direction switches from the second air direction to the first air direction, the air volume control unit is configured to determine the air volume value so as to exclude a predetermined small-air-volume-range corresponding to set values less than a predetermined set value.

2. The air conditioning indoor unit according to claim 1, wherein the air volume control unit has a means for receiving an automatic air volume instruction as an air volume setting instruction from a user, wherein the air conditioning indoor unit comprises a means for obtaining the room temperature of the room, wherein
in a case where the air volume control unit has received an automatic air volume setting instruction as an air volume setting instruction from a user, the air volume control unit is configured to determine the air volume value from within a predetermined air volume value range in accordance with the room temperature of the room and a set temperature, and
a lower limit value of the predetermined air volume value range when the air direction is the first air direction corresponds to the predetermined set value and is greater than a lower limit value of the predetermined air volume value range when the air direction is the second air direction.

3. The air conditioning indoor unit according to claim 1 or 2, wherein the air volume control unit has a means for receiving a predetermined air volume instruction as an air volume setting instruction from a user wherein
in a case where the air volume control unit has received a predetermined air volume setting instruction as an air volume setting instruction from a user, the air volume control unit is configured to determine the air volume value to be a set value according to the predetermined air volume setting instruction, and
in a case where the air direction is the first air direction, the air volume control unit is configured to add a correction value to the set value according to the predetermined air volume setting instruction when the air direction is the second air direction and is configured to determine the air volume value, which becomes a value equal to or greater than the predetermined set value.

4. The air conditioning indoor unit according to claim 3, wherein the air volume control unit is configured to add the correction value to the set value in a case where the air volume will enter the predetermined small-air-volume-range if the air volume control unit is configured to determine the air volume value to be the set value according to the predetermined air volume setting instruction.

5. The air conditioning indoor unit according to any one of claims 1 to 4, wherein
the flap has
a first flap (31) that is disposed in the neighborhood of the air outlet and
a second flap (32) that cooperates with the first flap to change the outlet air to a Coanda air flow along an undersurface (32a) of the second flap and guide the Coanda air flow toward the ceiling surface of the room, and
the air direction control unit controls the angles of the first flap and the second flap to thereby switch the air direction from the second air direction to the first air direction.

## Patentansprüche

1. Klimaanlage-Innenraumeinheit (10), umfassend:
ein Gehäuse (11), in dem ein Luftauslass (15) gebildet ist;
einen Lüfter (14), der das Luftvolumen an Auslassluft, die aus dem Luftauslass geblasen wird, ändern kann;
eine Klappe (31, 32), die die Luftrichtung der Auslassluft in die Aufwärts- und Abwärtsrichtung ändern kann;
eine Luftvolumensteuereinheit (62), die konfiguriert ist, um das Luftvolumen durch Steuern der Drehzahl des Lüfters in Übereinstimmung mit einem Luftvolumenwert, den sie bestimmt hat, einzustellen; und
eine Luftrichtungssteuereinheit (61), die konfiguriert ist, um die Luftrichtung durch Steuern des Winkels der Klappe einzustellen, und die zwischen einer ersten Luftrichtung, in die sich die Auslassluft zu einer Decke bewegt, und einer zweiten Luftrichtung, in die sich die Auslassluft nach unten bewegt, wechseln kann,
**dadurch gekennzeichnet, dass**, wenn die Luftrichtung von der zweiten Luftrichtung zu der ersten Luftrichtung wechselt, die Luftrichtungssteuereinheit konfiguriert ist, um den Luftvolumenwert derart zu bestimmen, dass ein vorbestimmter Kleinluftvolumenbereich, der Sollwerten entspricht, die niedriger sind als ein vorbestimmter Sollwert, ausgeschlossen wird.

2. Klimaanlage-Innenraumeinheit nach Anspruch 1, wobei die Luftvolumensteuereinheit ein Mittel zum Empfangen einer automatischen Luftvolumenanweisung als eine Luftvolumeneinstellanweisung von einem Benutzer aufweist, wobei die Klimaanlage-Innenraumeinheit ein Mittel zum Erhalten der Raumtemperatur des Raums umfasst, wobei
in einem Fall, in dem die Luftvolumensteuereinheit eine automatische Luftvolumeneinstellanweisung als eine Luftvolumeneinstellanweisung von einem Benutzer erhalten hat, die Luftvolumensteuereinheit konfiguriert ist, um den Luftvolumenwert von innerhalb eines vorbestimmten Luftvolumenwertbereichs in Übereinstimmung mit der Raumtemperatur des Raums und einer Solltemperatur zu bestimmen, und
einen unteren Grenzwert des vorbestimmten Luftvolumenwertbereichs, wenn die Luftrichtung die erste Luftrichtung ist, dem vorbestimmten Sollwert entspricht und größer ist als ein unterer Grenzwert des vorbestimmten Luftvolumenwertbereichs, wenn die Luftrichtung die zweite Luftrichtung ist.

3. Klimaanlage-Innenraumeinheit nach Anspruch 1 oder 2, wobei die Luftvolumensteuereinheit ein Mittel zum Empfangen einer vorbestimmten Luftvolumenanweisung als eine Luftvolumeneinstellanweisung von einem Benutzer aufweist, wobei
in einem Fall, in dem die Luftvolumensteuereinheit eine vorbestimmte Luftvolumeneinstellanweisung als eine Luftvolumeneinstellanweisung von einem Benutzer erhalten hat, die Luftvolumensteuereinheit konfiguriert ist, um zu bestimmen, dass der Luftvolumenwert ein Sollwert gemäß der vorbestimmten Luftvolumeneinstellanweisung ist, und
in einem Fall, in dem die Luftrichtung die erste Luftrichtung ist, die Luftvolumensteuereinheit konfiguriert ist, um einen Korrekturwert zu dem Sollwert gemäß der vorbestimmten Luftvolumeneinstellanweisung hinzuzufügen, wenn die Luftrichtung die zweite Luftrichtung ist, und konfiguriert ist, um den Luftvolumenwert zu bestimmen, der einen Wert gleich dem oder größer als der vorbestimmte Sollwertwert wird.

4. Klimaanlage-Innenraumeinheit nach Anspruch 3, wobei die Luftvolumensteuereinheit konfiguriert ist, um den Korrekturwert zu dem Sollwert in einem Fall hinzuzufügen, in dem das Luftvolumen in den vorbestimmten Kleinluftvolumenbereich eintritt, falls die Luftvolumensteuereinheit konfiguriert ist, um den Luftvolumenwert als den Sollwert gemäß der vorbestimmten Luftvolumeneinstellanweisung zu bestimmen.

5. Klimaanlage-Innenraumeinheit nach einem der Ansprüche 1 bis 4, wobei die Klappe
eine erste Klappe (31) aufweist, die in der Nachbarschaft des Luftauslasses angeordnet ist, und
eine zweite Klappe (32), die mit der ersten Klappe zusammenwirkt, um den Luftauslass auf einen Coanda-Luftstrom entlang einer unteren Oberfläche (32a) der zweiten Klappe zu wechseln und den Coanda-Luftstrom zu der Deckenoberfläche des Raums zu führen, und
die Luftrichtungssteuereinheit die Winkel der ersten Klappe und der zweiten Klappe steuert, um dadurch die Luftrichtung von der zweiten Luftrichtung zu der ersten Luftrichtung zu wechseln.

## Revendications

1. Unité intérieure de climatisation (10) comprenant :
un boîtier (11) dans lequel une sortie d'air (15) est formée ;
un ventilateur (14) qui peut changer le volume d'air de sortie soufflé à partir de la sortie d'air ;
un volet (31, 32) qui peut changer la direction d'air de l'air de sortie, dans la direction vers le haut et vers le bas ;
une unité de commande de volume d'air (62) qui est configurée pour ajuster le volume d'air en commandant la vitesse de rotation du ventilateur conformément à une valeur de volume d'air qu'il a déterminé ; et
une unité de commande de direction d'air (61) qui est configurée pour ajuster la direction d'air en commandant l'angle du volet et peut commuter entre une première direction d'air dans laquelle l'air de sortie va vers un plafond et une seconde direction d'air dans laquelle l'air de sortie va vers le bas,
**caractérisé en ce que**, lorsque la direction d'air commute de la seconde direction d'air à la première direction d'air, l'unité de commande du volume d'air est configurée pour déterminer la valeur du volume d'air de manière à exclure une petite plage de volumes d'air correspondant à des valeurs de consigne inférieures à une valeur de consigne prédéterminée.

2. Unité intérieure de climatisation selon la revendication 1, dans laquelle l'unité de commande de volume d'air présente un moyen pour recevoir une instruction de volume d'air automatique en tant qu'une instruction de réglage de volume d'air d'un utilisateur, dans laquelle l'unité intérieure de climatisation comprend un moyen pour obtenir la température ambiante de la pièce, dans laquelle
dans un cas où l'unité de commande de volume d'air a reçu une instruction de réglage de volume d'air automatique en tant qu'instruction de réglage de volume d'air d'un utilisateur, l'unité de commande de volume d'air est configurée pour déterminer la valeur de volume d'air venant du sein d'une plage de valeurs de volume d'air prédéterminées conformément à la température ambiante de la pièce et à une température de consigne, et
une valeur limite inférieure de la plage de valeurs de volume d'air prédéterminées lorsque la direction d'air est la première direction d'air correspond à la valeur de consigne prédéterminée et est supérieure à une valeur limite inférieure de la plage de valeurs de volume d'air prédéterminées lorsque la direction d'air est la seconde direction d'air.

3. Unité intérieure de climatisation selon la revendication 1 ou 2, dans laquelle l'unité de commande de volume d'air présente un moyen pour recevoir une instruction de volume d'air prédéterminée en tant qu'instruction de réglage de volume d'air d'un utilisateur dans lequel
dans un cas où l'unité de commande de volume d'air a reçu une instruction de réglage de volume d'air prédéterminée en tant qu'instruction de réglage de volume d'air d'un utilisateur, l'unité de commande de volume d'air est configurée pour déterminer la valeur de volume d'air comme valeur de consigne conformément à l'instruction de réglage de volume d'air prédéterminée, et
dans un cas où la direction d'air est la première direction d'air, l'unité de commande de volume d'air est configurée pour ajouter une valeur de correction à la valeur de consigne conformément à l'instruction de réglage de volume d'air prédéterminée lorsque la direction d'air est la seconde direction d'air et est configurée pour déterminer la valeur de volume d'air, qui devient une valeur égale ou supérieure à la valeur de consigne prédéterminée.

4. Unité intérieure de climatisation selon la revendication 3, dans laquelle l'unité de commande de volume d'air est configurée pour ajouter la valeur de correction à la valeur de consigne dans un cas où le volume d'air va entrer dans la plage de petits volumes d'air prédéterminés si l'unité de commande de volume d'air est configurée pour déterminer la valeur de volume d'air en tant que valeur de consigne conformément à l'instruction de réglage de volume d'air prédéterminée.

5. Unité intérieure de climatisation selon l'une quelconque des revendications 1 à 4, dans laquelle le volet présente
un premier volet (31) qui est disposé au voisinage de la sortie d'air et
un second volet (32) qui coopère avec le premier volet pour changer l'air de sortie en un écoulement d'air de Coanda le long d'une surface inférieure (32a) du second volet et guider l'écoulement d'air de Coanda vers la surface de plafonnage de la pièce, et
l'unité de commande de direction d'air commande les angles du premier volet et du second volet pour faire commuter de la sorte la direction d'air de la seconde direction d'air à la première direction d'air.
